# EUROPÄISCHE PATENTSCHRIFT

(11) **EP 1 187 745 B1**
(45) Veröffentlichungstag und Bekanntmachung des Hinweises auf die Patenterteilung: **22.02.2006**
(21) Anmeldenummer: 99926498.9
(22) Anmeldetag: 01.06.1999
(51) Int. Cl.: B60T 7/10, B60T 13/74

(54) **VORRICHTUNG UND VERFAHREN ZUM ANSTEUERN EINER ELEKTRISCH BETÄTIGBAREN FESTSTELLBREMSE**
DEVICE AND METHOD FOR CONTROLLING AN ELECTRICALLY ACTUATED PARKING BRAKE
DISPOSITIF ET PROCEDE PERMETTANT DE COMMANDER UN FREIN DE STATIONNEMENT A COMMANDE ELECTRIQUE

(43) Veröffentlichungstag der Anmeldung: 20.03.2002
(73) Patentinhaber: Continental Teves AG & Co. oHG, 60488 Frankfurt (DE)
(72) Erfinder: BÖHM, Jürgen, D-65558 Oberneisen (DE); NELL, Joachim, D-63452 Hanau (DE)
(74) Vertreter: Dusil, Vladimir
(86) Internationale Anmeldenummer: PCT/EP1999/003792
(87) Internationale Veröffentlichungsnummer: WO 2000/073114

(56) Entgegenhaltungen:
- WO-A-96/26091
- DE-A- 19 548 560
- DE-C- 19 744 356

## Beschreibung

Die Erfindung betrifft eine Vorrichtung zum Ansteuern einer elektrisch betätigbaren Feststellbremse mit Eingabemitteln für einen Fahrerwunsch betreffend eine Betätigung der Feststellbremse, und einer Steuereinheit zum Erfassen des Fahrerwunsches über ein entsprechendes Ausgangssignal der Eingabemittel, zum Ermitteln eines Sollwerts FS_soll der Betätigungskraft der Feststellbremse entsprechend dem Fahrerwunsch und zum Ausgeben eines Steuersignals an einen Aktuator der Feststellbremse entsprechend dem ermittelten Sollwert FS_soll, wobei die Eingabemittel von dem Fahrer in eine Spannstellung, eine Lösestellung und eine Ruhestellung bringbar sind.

Gemäß dem Stand der Technik sind Feststellbremsanlagen bekannt, die über Seilzüge und Gestänge mit einer vom Fahrer durch Muskelkraft betätigten Einrichtung verbunden sind. Die muskelkraftbetätigte Einrichtung ist beispielsweise ein vom Fahrerfuß betätigtes Pedal oder ein Handbremshebel.

Neuerdings sind ferner Feststellbremsen bekannt, bei denen eine elektromotorische Bremsenbetätigung vorgesehen ist. Beispielsweise ist aus der DE 41 29 919 A1 eine Feststellbremsanlage bekannt, die an den Radbremsen jeweils Elektromotoren aufweist, welche über ein entsprechendes Signal angesteuert werden können. Außerdem ist die Bremsenspannkraft dosierbar einstellbar. Die Ansteuerung nach Vorgabe eines Fahrerwunsches erfolgt bei der vorbekannten Feststellbremsanlage mit Hilfe eines Betätigungselements, das als schwenkbarer Handhebel ausgebildet ist und einen Sollwertgeber aufweist. Als weniger vorteilhaft ist bei der vorbekannten Feststellbremsanlage die Ausbildung des Betätigungselements als Handhebel anzusehen, der relativ viel Platz im Innenraum des Kraftfahrzeugs benötigt und für den Fahrzeugführer einen unbefriedigenden Bedienkomfort bietet. Außerdem ist dafür zu sorgen, dass der Fahrerwunsch von der Feststellbremsanlage zuverlässig ausgeführt wird.

Die Aufgabe der Erfindung ist es daher, eine Vorrichtung zum Ansteuern einer elektrisch betätigbaren Feststellbremse zu schaffen, die ein bauraumoptimiertes Eingabemittel für den Fahrerwunsch aufweist und diesen zuverlässig einer den Fahrerwunsch weiterverarbeitenden Einheit zuführt.

Diese Aufgabe wird erfindungsgemäß dadurch gelöst, dass die Eingabemittel als ein Taster ausgebildet sind, der zwei redundant ausgeführte Schalter S1, S1' und S2, S2'betätigt. Da durch diese Maßnahme ermöglicht wird, eventuelle Fehler zu erkennen, wird die Sicherheit der Betätigung weiter erhöht.

Erfindungsgemäß ist vorgesehen, dass dann, wenn sich die Eingabemittel in der Ruhestellung befinden, ein Istwert FS_ist der Feststellbremse beibehalten wird. Befinden sich die Eingabemittel in der Lösestellung, so wird der Sollwert FS_soll auf Null gesetzt. Wenn weiterhin die Eingabemittel in der Spannstellung sind, so wird der Sollwert FS_soll ausgehend von dem Istwert FS_ist erhöht.

Eine besonders vorteilhafte Weiterbildung des Erfindungsgegenstandes sieht vor, dass dann, wenn sich die Eingabemittel in der Spannstellung befinden, der Sollwert FS_soll stufenweise bis zu einem Grenzwert FS_max erhöht wird. Natürlich kann der Sollwert FS_soll auch stufenlos erhöht werden, sofern gewünscht.

Außerdem ist vorgesehen, dass die Steuereinheit nach dem Ablaufen einer vorbestimmten Zeitdauer T_{RUHE} nach der letzten Betätigung der Eingabemittel eine Ansteuerelektronik der Feststellbremse in einen Ruhezustand mit einer minimalen Leistungsaufnahme schaltet. Dadurch ist es möglich, eine Abschaltverzögerung zu realisieren, welche die Ansteuerelektronik bzw. die Steuereinheit in einen Betriebsmodus mit einer minimalen Leistungsaufnahme schaltet.

Bei einer bevorzugten Ausführungsform wird der Istwert FS_ist und/oder der Sollwert FS-soll durch eine optische Anzeigeeinrichtung dargestellt. Eine derartige optische Anzeigeeinrichtung wären etwa Leuchtdioden oder ähnliche Mittel, welche dem Fahrer anzeigen, welche Betätigungskraft der Feststellbremse gerade vorliegt bzw. welche Betätigungskraft der Feststellbremse gerade über die Eingabemittel als Sollwert eingegeben wird bzw. wurde.

Eine weitere vorteilhafte Weiterbildung des Erfindungsgegenstandes sieht vor, dass die Eingabemittel eine haptische Rückmeldung des Betätigungszustands geben. Dadurch kann der Fahrer bei der Betätigung der Eingabemittel eine Rückmeldung darüber erhalten, in welchem Zustand sich die Feststellbremse gerade befindet bzw. welcher Sollwert gerade angegeben wird.

Im folgenden werden Ausführungsbeispiele der Erfindung anhand von schematischen Zeichnungen näher erläutert. Es zeigen:
- Fig. 1: eine schematische Darstellung einer erfindungsgemäßen Vorrichtung;
- Figuren 2 und 3: graphische Darstellung eines Verlaufs des Sollwerts FS_soll über der Zeit und
- Fig. 4: einen Flußlaufplan, der ein Beispiel einer erfindungsgemäßen Abarbeitung in der Steuereinheit zeigt.

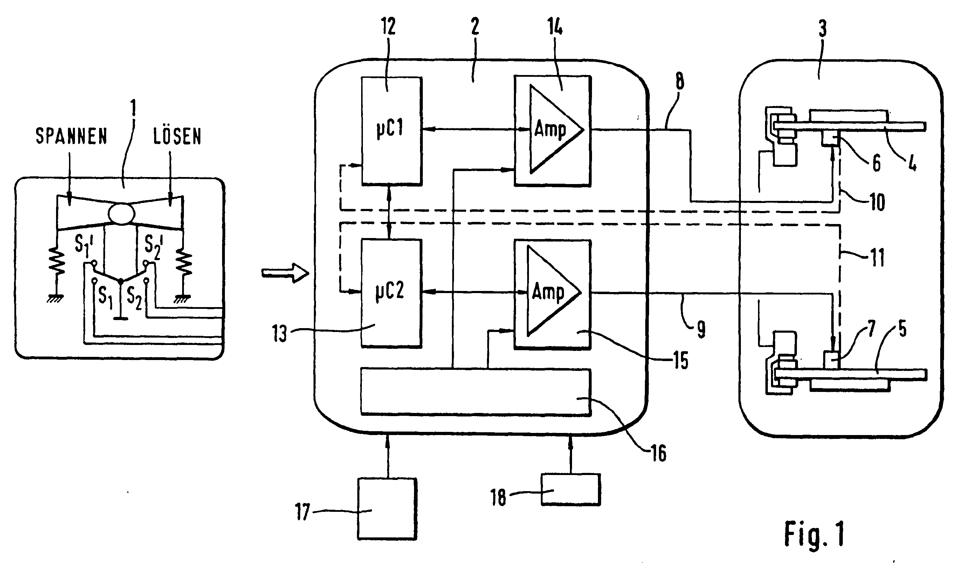

Die Fig. 1 zeigt einen Taster 1, der sofern nicht betätigt, in einer Ruhestellung verbleibt. Diese Ruhestellung ist in der Fig. 1 dargestellt. Würde der Taster 1 von einem Fahrer an seiner linken Seite betätigt werden, so würde sich der Taster 1 in eine Spannstellung bewegen, wobei bei einer Betätigung des Tasters 1 auf seiner rechten Seite eine Lösestellung vorliegen würde.

Der Taster 1 ist redundant und jeweils als Wechselschalter ausgeführt, der ein digital arbeitendes Betätigungselement darstellt. Die in der Fig. 1 dargestellte Ruhestellung entspricht der Schalterstellung S1 = 0 (offen), S1' = 1 (geschlossen), S2 = 0 (offen) und S2' = 1 (geschlossen).

In der Spannstellung gilt S1 = 1 und S2 = 0 und in der Lösestellung gilt S1 = 0 und S2 = 1. Sofern S1 = 1 und S2 = 1 vorliegt, kann auf eine unplausible Kombination geschlossen werden und damit auf einen Fehler des Tasters 1 bzw. einer Steuereinheit 2 und in diesem Fall würde die Steuereinheit 2 keine Betätigung der Feststellbremse 3 veranlassen und damit auch keine Veränderung des aktuellen Istwerts. Weiterhin könnte in diesem Fall eine Fehlermeldung an eine Diagnoseeinheit ausgegeben werden und es könnte eine entsprechende Warnlampe aktiviert werden.

Der Taster 1 ist mit der Steuereinheit 2 elektrisch verbunden, so daß der Fahrerwunsch in entsprechende Ansteuersignale für eine Aktivierung der Feststellbremse 3 umgewandelt werden kann.

Die Feststellbremse 3 weist an zumindest zwei Radbremsen 4 und 5 jeweils einen Elektromotor 6 und 7 auf. Der Elektromotor 6 kann über eine Ansteuerleitung 8 und der Elektromotor 7 über eine Ansteuerleitung 9 angesteuert werden. Über die Ansteuerleitungen 8 und 9 können entsprechende Befehle an die Elektromotoren 6 und 7 ausgegeben werden, so daß diese die geforderte Betätigungskraft FS_soll einstellen. Die Elektromotoren 6 und 7 weisen weiterhin Rückmeldungsleitungen 10 und 11 auf, welche die Istposition und/oder die Ist-Betätigungskraft an jeweils einen Mikrocomputer 12, 13 übermitteln. Der Mikrocomputer 12, 13 ist nun in der Lage, dafür zu sorgen, daß der über die Leitungen 8, 9 vorgegebene Sollwert erreicht wird. Die Ansteuerung der Elektromotoren 6 und 7 erfolgt über entsprechende Verstärker 14 und 15.

Weiterhin ist eine Notschaltung 16 vorgesehen, die die Verstärker 14 und 15 mit Strom versorgt. Die Notschaltung 16 kann dafür sorgen, daß beim Ausfall einer Hauptbatterie 17 die Stromversorgung über eine Hilfsbatterie 18 sichergestellt ist.

Das gesamte in der Fig. 1 dargestellte System ist redundant ausgeführt, so daß beim Ausfall eines Elements bzw. Bausteins immer noch die Betriebssicherheit gewährleistet ist.

Weiterhin sei an dieser Stelle angemerkt, daß dem Taster 1 bzw. den Eingabemitteln noch ein Signal eines Controller-Area-Networks (CAN) überlagert werden kann, um die Feststellbremse beispielsweise gemäß einer Hill-Holder-Funktion zu aktivieren oder die Betätigungskraft entsprechend einer gemessenen Steigung einzustellen.

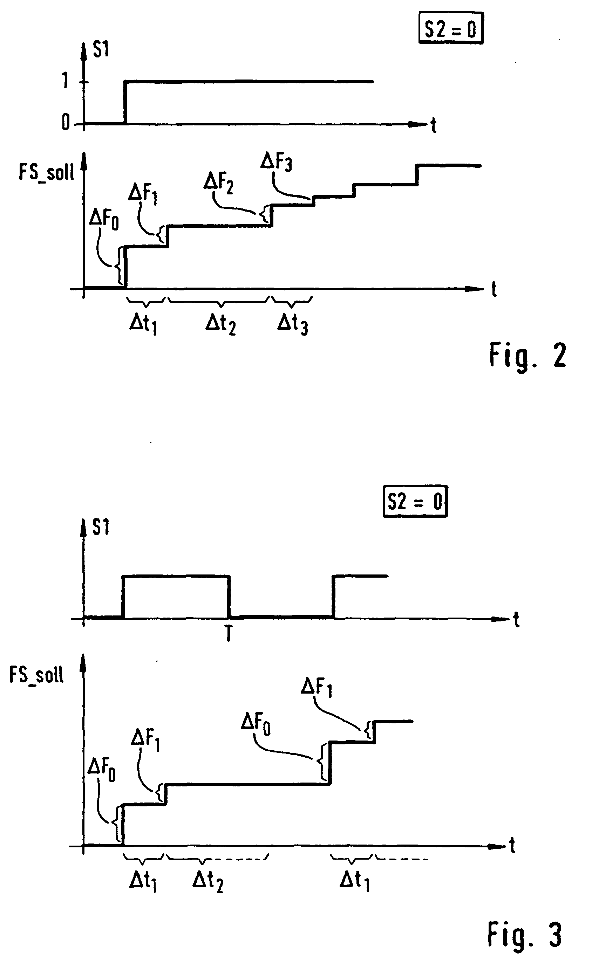

In der Fig. 2 ist in der oberen Darstellung die Stellung des Schalters S1 über der Zeit t und in der unteren Darstellung der Sollwert FS_soll über der Zeit t dargestellt. Das gleiche gilt für die Fig. 3.

Für beide Figuren bzw. Darstellungen gilt, daß der Schalter S2 offen ist, d.h. S2 = 0.

In der Fig. 2 ist dargestellt, daß zu einem bestimmten Zeitpunkt der Schalter S1 geschlossen wird, was einer digitalen 1 entspricht. Wenn die Steuereinheit 2 dieses Signal erfaßt, erhöht diese den Sollwert der Betätigungskraft um einen Betrag ΔF₀. Bleibt der Taster in der Spannstellung, so wird nach dem Ablauf einer vorbestimmten Zeit Δt₁ der Sollwert FS_soll um einen weiteren Betrag ΔF₁ erhöht. Nach Ablauf einer weiteren Zeitspanne Δt₂ wird der Sollwert FS_soll um einen weiteren Betrag ΔF₂ erhöht, usw. An dieser Stelle sei angemerkt, daß die Beträge der Erhöhung des Sollwerts und die Zeitdauern des Beibehaltens der Erhöhungen nicht equidistant ausgeführt sind. Beispielsweise kann es vorteilhaft sein, daß der Anfangsbetrag ΔF₀ größer ist als die Folgebeträge ΔF₁, ΔF₂, ΔF₃, usw. Dadurch kann eine schnelle Anfangsaktivierung der Feststellbremsanlage erfolgen, wobei jedoch vermieden wird, daß der Maximalwert zu früh anliegt. Der Maximalwert kann erst nach einer längeren Betätigung des Tasters 1 erzielt werden.

In der Fig. 3 ist dargestellt, daß der Taster 1 zunächst bis zu einer Zeit T in eine Spannstellung gebracht wird. Danach wird der Taster 1 nicht mehr betätigt und geht in seine Ruhestellung über. Das bedeutet, daß der Sollwert FS_soll konstant gehalten wird. Wird dann anschließend der Taster 1 wieder in die Spannstellung gebracht, so wird der Sollwert FS_soll um einen Betrag ΔF₀ erhöht, und zwar ausgehend von dem Istwert der Betätigungskraft FS_ist.

Es sei angemerkt, daß natürlich auch eine kontinuierliche Erhöhung des Sollwerts FS_soll möglich ist; das gleiche gilt für eine Einstellung von identischen Kraftinkrementen ΔF₀, ₁, ₂ ... und Zeitinkrementen Δt₁, _{2, 3} .... .

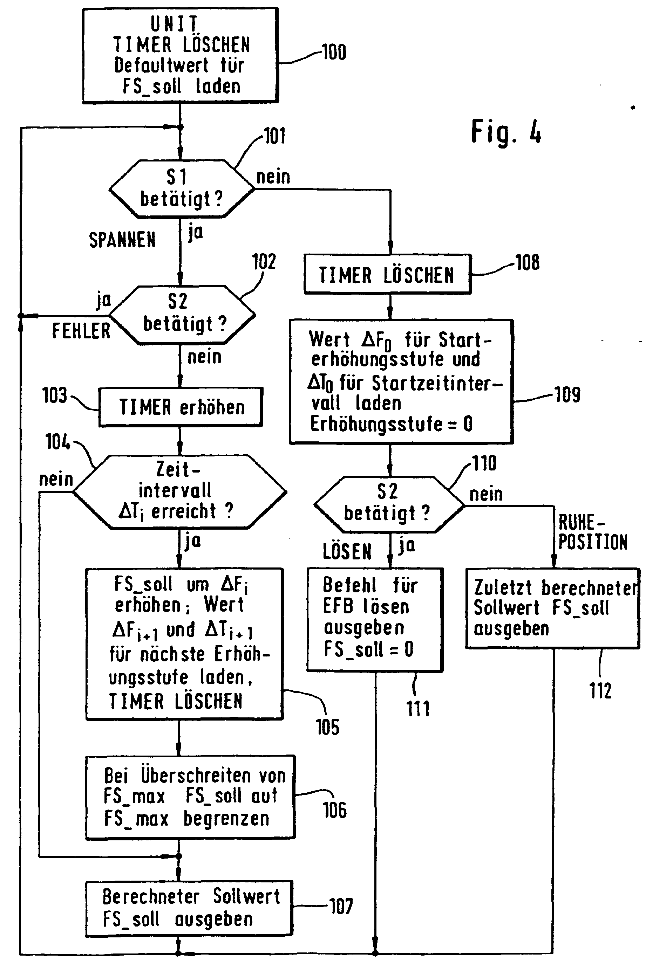

In der Fig. 4 ist ein Flußlaufplan einer Abarbeitung dargestellt, wie sie in der Steuereinheit 2 bzw. in den Mikroprozessoren 12 und 13 durchgeführt werden kann.

In einem Schritt 100 wird die Abarbeitung initialisiert und ein Timer wird gelöscht. Weiterhin wird ein Default-Wert für FS_soll geladen. Dieser Default-Wert kann einer vorbestimmten Betätigung bzw. Bewegung der Bremsbacken in Richtung auf das sich drehende Teil der Feststellbremse 3 bedeuten, um die Betätigungswege der Feststellbremse zu minimieren. In einem Schritt 101 wird abgefragt, ob der Schalter S1 des Tasters 1 betätigt ist (S1 = 1). Sofern S1 betätigt ist, wird darauf geschlossen, daß sich der Taster 1 in einer Spannstellung befindet, woraufhin in einem Schritt 102 abgefragt wird, ob zusätzlich der Schalter S2 betätigt ist (S2 = 1). Ist dies der Fall, so wird auf einen Fehler des Systems bzw. des Tasters 1 geschlossen und die Abarbeitung geht zurück zwischen die Schritte 100 und 101. Dies bedeutet, daß die Feststellbremse 3 nicht aktiviert und/oder deren Zustand nicht geändert wird.

Wird im Schritt 102 beurteilt, daß der Schalter S2 nicht betätigt ist, so wird der Timer in einem Schritt 103 gestartet. In einem Schritt 104 wird abgefragt, ob ein vorbestimmtes Zeitintervall ΔTᵢ erreicht ist. Ist dies der Fall, so wird der Sollwert FS_soll um ΔFᵢ erhöht und es werden die Werte ΔFᵢ₊₁ und ΔTᵢ₊₁ für die nächste Erhöhungsstufe geladen. Der Timer wird zurückgesetzt. In einem Schritt 106 wird anschließend überprüft, ob der Sollwert FS_soll einen Maximalwert FS_max erreicht hat, und wenn ja, wird der Sollwert FS_soll auf diesen Maximalwert FS_max begrenzt.

Anschließend wird der berechnete Sollwert in einem Schritt 107 ausgebeben und die Abarbeitung verzweigt zurück zwischen die Schritte 100 und 101.

Wenn im Schritt 104 beurteilt wurde, daß das Zeitintervall ΔTᵢ nicht erreicht ist, so wird zwischen die Schritte 106 und 107 verzweigt. Das bedeutet, daß der Sollwert noch konstant gehalten wird, da das vorbestimmten Zeitintervall ΔTᵢ noch nicht abgelaufen ist.

Wird im Schritt 101 beurteilt, daß der Schalter S1 nicht betätigt ist, so wird nochmals in einem Schritt 108 der Timer zurückgesetzt bzw. gelöscht. Dann wird in einem Schritt 109 der Wert ΔF₀ für die Starterhöhungsstufe und ΔT₀ für das Startzeitintervall geladen (Erhöhungsstufe = 0). In einem Schritt 110 wird dann überprüft, ob der Schalter S2 betätigt ist (S2 = 1). Ist der Schalter S2 betätigt, so wird auf eine Lösestellung des Tasters 1 geschlossen und es wird im Schritt 111 ein Befehl für das Lösen der elektrisch betätigbaren Feststellbremse ausgegeben, wobei der Wert FS_soll gleich 0 gesetzt wird. Die Abarbeitung verzweigt dann zurück zwischen die Schritte 100 und 101.

Wird im Schritt 110 beurteilt, daß der Schalter S2 nicht betätigt ist (S2 = 0), so wird darauf geschlossen, daß sich der Taster 1 in seiner Ruhestellung befindet. In einem Schritt 112 wird dann der zuletzt berechnete Sollwert FS_soll an die Feststellbremse 3 ausgegeben, d.h. der Ist-Zustand bleibt erhalten.

Wie oben dargestellt ist, wird bei einer Nichtbetätigung der Eingabemittel bzw. des Tasters (S1 = 0, S2 = 0) auf eine Ruhestellung geschlossen. Damit wird der gegenwärtige Betätigungszustand der Feststellbremse 3 beibehalten, wobei der zuletzte bestimmte Sollwert (FS_soll) für die elektrische Feststellbremse 3 beibehalten wird und/oder mittels der entsprechenden Steuerung/Regelung eingestellt wird.

Wird der Taster in eine Lösestellung gebracht (S1 = 0, S2 = 1), so wird unabhängig vom gegenwärtigen Betätigungszustand der Feststellbremse 3 ein Befehl zum Lösen an die Steuerung/Regelung ausgegeben (FS_soll = 0). Daraufhin wird die elektrische Feststellbremse gelöst und ein Beleg-Luftspiel wird eingestellt (zum Minimieren der Betätigungswege). Dabei ist es nicht notwendig, während des gesamten Lösevorgangs der Feststellbremse 3 das Eingabemittel bzw. den Taster in der Lösestellung gedrückt zu halten. Es ist vielmehr ausreichend, durch ein kurzes Betätigung des Schalters in die Lösestellung das Lösen der Feststellbremse 3 zu initiieren.

Wenn der Taster in seine Spannstellung gebracht wird (S1 = 1, S2 = 0), so erfolgt, solange der Taster betätigt ist, eine stufenweise Erhöhung des vor Beginn der Tasterbetätigung vorliegenden Sollwertes FS_soll. Wird der Schalter nach einer vorbestimmten Zeit T wieder gelöst, d.h. der Taster geht in die Ruhestellung über, und danach wieder erneut betätigt, so wird die Vorgehensweise der stufenweisen Sollwerterhöhung wieder initialisiert und von neuem gestartet (bis zum Erreichen des maximalen Sollwertes FS_max bzw. solange der Taster in seiner Spannstellung verbleibt).

## Patentansprüche

1. Vorrichtung zum Ansteuern einer elektrisch betätigbaren Feststellbremse (3) mit Eingabemitteln für einen Fahrerwunsch betreffend eine Betätigung der Feststellbremse (3), und einer Steuereinheit (2) zum Erfassen des Fahrerwunsches über ein entsprechendes Ausgangssignal der Eingabemittel, zum Ermitteln eines Sollwerts FS_soll der Betätigungskraft der Feststellbremse (3) entsprechend dem Fahrerwunsch und zum Ausgeben eines Steuersignals an einen Aktuator der Feststellbremse (3) entsprechend dem ermittelten Sollwert FS_soll, wobei die Eingabemittel von dem Fahrer in eine Spannstellung, eine Lösestellung und eine Ruhestellung bringbar sind, **dadurch gekennzeichnet, dass** die Eingabemittel als ein Taster (1) ausgebildet sind, der zwei redundant ausgeführte Schalter S1, S1' und S2, S2' betätigt.

2. Vorrichtung nach Anspruch 1, **dadurch gekennzeichnet, dass** dann, wenn sich die Eingabemittel in der Ruhestellung befinden, ein Istwert FS_ist der Feststellbremse (3) beibehalten wird.

3. Vorrichtung nach einem der Ansprüche 1 oder 2, **dadurch gekennzeichnet, dass** dann, wenn sich die Eingabemittel in der Lösestellung befinden, der Sollwert FS_soll auf Null gesetzt ist.

4. Vorrichtung nach zumindest einem der Ansprüche 1 bis 3, **dadurch gekennzeichnet, dass** dann, wenn sich die Eingabemittel in der Spannstellung befinden, der Sollwert FS_soll ausgehend von dem Istwert FS_ist erhöht wird.

5. Vorrichtung nach Anspruch 4, **dadurch gekennzeichnet, dass** dann, wenn sich die Eingabemittel in der Spannstellung befinden, der Sollwert FS_soll stufenweise bis zu einem Grenzwert FS_max erhöht wird.

6. Vorrichtung nach zumindest einem der Ansprüche 1 bis 5, **dadurch gekennzeichnet, dass** die Steuereinheit (2) nach dem Ablaufen einer vorbestimmten Zeitdauer T_{RUHE} nach der letzten Betätigung der Eingabemittel eine Ansteuerelektronik der Feststellbremse (3) in einen Ruhezustand mit einer minimalen Leistungsaufnahme schaltet.

7. Vorrichtung nach zumindest einem der Ansprüche 1 bis 6, **dadurch gekennzeichnet, dass** der Istwert FS_ist durch eine optische Anzeigeeinrichtung dargestellt wird.

8. Vorrichtung nach zumindest einem der Ansprüche 1 bis 7, **dadurch gekennzeichnet, dass** die Eingabemittel eine haptische Rückmeldung des Betätigungszustands geben.

## Claims

1. Device for controlling an electrically actuated parking brake (3) with input means for a request of the driver relating to an actuation of the parking brake (3), and a control unit (2) for detecting the driver's request by way of a corresponding output signal of the input means, for determining a nominal value FS_soll of the actuating force of the parking brake (3) in conformity with the driver's request, and for outputting a control signal to an actuator of the parking brake (3) corresponding to the determined nominal value FS_soll, wherein the input means can be induced by the driver to adopt an application position, a release position, and a neutral position,
**characterized in that** the input means is designed as a tip switch (1) actuating two switches S1, S1' and S2, S2' having a redundant design.

2. Device as claimed in claim 1,
**characterized in that** when the input means has adopted a neutral position, an actual value FS_ist of the parking brake (3) is maintained.

3. Device as claimed in any one of claims 1 or 2,
**characterized in that** when the input means has adopted the release position, the nominal value FS_soll is set to zero.

4. Device as claimed in at least any one of claims 1 to 3,
**characterized in that** when the input means has adopted the application position, the nominal value FS_soll will be increased starting from the actual value FS_ist.

5. Device as claimed in claim 4,
**characterized in that** when the input means has adopted the application position, the nominal value FS_soll will be increased gradually until a limit value FS_max.

6. Device as claimed in at least any one of claims 1 to 5,
**characterized in that** the control unit (2) induces an actuating electronics of the parking brake (3) to switch to an inactive condition with a minimum power absorption upon expiry of a predetermined duration Tᵣₑₛₜ after the last actuation of the input means.

7. Device as claimed in at least any one of claims 1 to 6,
**characterized in that** the actual value FS_ist is illustrated by an optical display device.

8. Device as claimed in at least any one of claims 1 to 7,
**characterized in that** the input means provide a haptic feedback of the actuating condition.

## Revendications

1. Dispositif de commande d'un frein de stationnement (3) à actionnement électrique comportant des moyens d'entrée pour le souhait du conducteur concernant un actionnement du frein de stationnement (3), ainsi qu'une unité de commande (2) pour détecter le souhait du conducteur par un signal de sortie correspondant des moyens d'entrée, pour déterminer une valeur de consigne FS_soll de la force d'actionnement du frein de stationnement (3) correspondant au souhait du conducteur et pour délivrer un signal de commande à un actionneur du frein de stationnement (3) conformément à la valeur de consigne FS_soll déterminée, les moyens d'entrée pouvant être amenés par le conducteur dans une position de serrage, une position de desserrage et une position de repos, **caractérisé en ce que** les moyens d'entrée sont réalisés sous la forme d'une touche (1) qui actionne deux commutateurs (S1, S1' et S2, S2') réalisés redondants.

2. Dispositif selon la revendication 1, **caractérisé en ce que** lorsque les moyens d'entrée se trouvent en position de repos, une valeur réelle FS_ist du frein de stationnement (3) est conservée.

3. Dispositif selon l'une des revendications 1 ou 2, **caractérisé en ce que** lorsque les moyens d'entrée se trouvent dans la position de desserrage, la valeur de consigne FS_soll est placée sur zéro.

4. Dispositif selon l'une au moins des revendications 1 à 3, **caractérisé en ce que** lorsque les moyens d'entrée se trouvent dans la position de serrage, la valeur de consigne FS_soll est augmentée à partir de la valeur réelle FS_ist.

5. Dispositif selon la revendication 4, **caractérisé en ce que**, lorsque les moyens d'entrée se trouvent dans la position de serrage, la valeur de consigne FS_soll est augmentée par étape jusqu'à une valeur limite FS_max.

6. Dispositif selon l'une au moins des revendications 1 à 5, **caractérisé en ce qu'**après expiration d'une durée prédéterminée T_{RUHE} après le dernier actionnement des moyens d'entrée, l'unité de commande (2) fait commuter une électronique de commande du frein de stationnement (3) dans un état de repos avec une absorption de puissance minimale.

7. Dispositif selon l'une au moins des revendications 1 à 6, **caractérisé en ce que** la valeur réelle FS_ist est représentée par un dispositif d'affichage optique.

8. Dispositif selon l'une au moins des revendications 1 à 7, **caractérisé en ce que** les moyens d'entrée donnent un signal optique en retour de l'état d'actionnement.
